# EUROPÄISCHE PATENTSCHRIFT

(11) **EP 1 637 621 B1**
(45) Veröffentlichungstag und Bekanntmachung des Hinweises auf die Patenterteilung: **07.05.2008**
(21) Anmeldenummer: 05405485.3
(22) Anmeldetag: 18.08.2005
(51) Int. Cl.: C23C 4/06, B22F 9/02, F16C 33/12

(54) **Spritzpulver und Lagerteil einer Lagervorrichtung beschichtet mit dem Spritzpulver**
Spray powder and bearing element of a bearing device, coated with the spray powder
Poudre de pulvérisation et élément de palier d'un dispositif de palier, revêtu avec la poudre de pulvérisation

(30) Priorität: 17.09.2004 EP 04405595
(43) Veröffentlichungstag der Anmeldung: 22.03.2006
(73) Patentinhaber: Sulzer Metco AG, 5610 Wohlen (CH)
(72) Erfinder: Barbezat, Gérard, 8152 Opfikon (CH)
(74) Vertreter: Sulzer Management AG

(56) Entgegenhaltungen:
- WO-A-94/18463
- WO-A-99/06722
- WO-A-20/04067793
- DE-A- 3 808 460
- DE-A- 10 142 645

## Beschreibung

Die Erfindung betrifft ein Spritzpulver, eine mit dem Spritzpulver erzeugte eisenhaltige Oberflächenschicht, sowie ein Verfahren zum Aufbringen einer solchen Oberflächenschicht gemäss dem Oberbegriff des unabhängigen Anspruchs der jeweiligen Kategorie.

Lagervorrichtungen aller Art, z.B. Gleit- und Wälzlager nehmen in der Technik den überwiegenden Anteil von eingesetzten Lagern ein. Unter dem Begriff "Lager" bzw. Lagervorrichtungen sind im Folgenden alle, die Funktion des Lagers definierenden, z.B. aufeinander abrollenden, bzw. abgleitenden oder ineinander abgestützen Lagerteile zu verstehen, die in lagerndem Kontakt zusammenwirken.

Mit der an den in lagerndem Kontakt zusammenwirkenden Lagerlaufflächen entstehenden Reibung, sind in der Regel Verschleißerscheinungen verbunden, besonders an den Lagerlaufflächen. Damit diese Verschleißerscheinungen nicht einen Wechsel der kompletten Lagervorrichtung nötig machen, werden unter anderem bei Gleitlagern Lagerschalen verwendet, die nach ihrer Abnutzung ausgetauscht werden können. Dadurch wird allerdings der konstruktive Aufbau des Gleitlagers wesentlich verkompliziert und mit dem Auswechseln der Lagerschalen wird außerdem ein kostenintensiver Wartungsprozeß nötig.

Zum Lagern werden häufig Gleitlager, insbesondere geteilte Gleitlager mit Lagerschalen verwendet. Teilweise findet auch die kombinierte Lagerung in Gleit- und Wälzlagern Anwendung. Die Lagerteile sind in der Regel aus Gusseisen mit Kugelgraphit oder Vergütungsstahl, oder auch oft aus Stahl- oder Fe-Basis Sinterwerkstoffen oder aus Temperguss hergestellt. Die Lagerschalen sind meistens als sogenannte Zwei- oder Dreischichtlager realisiert. Die Herstellung solcher Lagerschalen ist jedoch relativ aufwendig. Bei hohen Laufleistungen der Maschine nutzen sich die Lagerschalen schließlich soweit ab, daß das Wechseln der Lagerschalen nötig wird, wobei das Wechseln der Lagerschalen in solchen Maschinen, wie oben schon erwähnt wurde, mit hohen Kosten verbunden ist.

Aber auch bei anderen Arten von Lagern, z.B. bei Kugellagern ist der vorzeitige Verschleiss der Lagerteile, also zum Beispiel der Kugeln des Kugellagers, einer durch das Kugellager zu lagernde Achse, ein Käfig für die Kugeln des Kugellagers, oder anderer Lagerteile des Kugellagers ein prinzipielles Problem, das erheblichen Aufwand für Reparaturen und Wartung nach sich zieht und letztlich mit erheblichen Kosten verbunden ist.

Die Aufgabe der Erfindung ist es daher, die Gleiteigenschaften einer Oberfläche eines Lagerteils zu verbessern, und eine verbessertes und konstruktiv einfachere Lagervorrichtung vorzuschlagen, die eine deutlich erhöhte Lebensdauer hat.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.
Die Erfindung betrifft somit ein Spritzpulver zum Beschichten eines Substrats, insbesondere zum Beschichten eines Lagerteils einer Lagervorrichtung, welches Spritzpulver, abgesehen von Verunreinigungen, die folgende Zusammensetzung aufweist:
Kohlenstoff = 0.1% bis 1.5% Gewichts-Prozent, Mangan = 0.1% bis 8% Gewichts-Prozent, Schwefel = 0.1% bis 2% Gewichts-Prozent, Kupfer = 12% Gewichts-Prozent und Eisen = Differenz auf 100% Gewichts-Prozent. Darüber hinaus ist mindestens ein Element aus der Gruppe bestehend aus Phosphor, Chrom und Molybdän enthalten, wobei Phosphor mit 0.01% bis 0.2% Gewichts-Prozent, Chrom mit 5% bis 20% Gewichts-Prozent und Molybdän mit 0.1% bis 20% Gewichts-Prozent enthalten ist. In der WO 2004/067793 A2 ist ein Spritzpulver auf Eisenbasis offenbart, das einen Kupfergehalt von bis zu 4% aufweist.
Ein entscheidender Bestandteil des erfindungsgemässen Spritzpulvers ist dagegen Kupfer mit einem Gehalt von 12%, das in einer mit dem erfindungsgemässen Spritzpulver gespritzten Schicht beim Abkühlen des auf ein Werkstück aufgespritzten flüssigen Pulvers ausscheidet, so dass in der Schicht isolierte Phasen entstehen, die entsprechend räumlich mehr oder weniger isolierte Bereiche aus Kupfer bilden. Diese Kupferausscheidungen bilden relativ weiche Bereiche, das heisst Bereich mit geringer Härte, in der ansonsten verhältnismässig harten eisenhaltigen Schicht.
Wie weiter unten noch eingehender erläutert wird, eignet sich somit das erfindungsgemässe Spritzpulver insbesondere zur Beschichtung der Oberfläche eines Werkstücks, welche Oberfläche mit einer anderen Oberfläche in lagerndem Kontakt zusammenwirkt, da die Kupferausscheidungen die Gleiteigenschaften der Oberflächenschicht erheblich verbessern.
Um besonders gute Ergebnisse beim thermischen Spritzen zu erzielen, liegt die Teilchengrösse des Spritzpulvers besonders vorteilhaft zwischen 1 µm und 90 µm, vorzugsweise zwischen 5 µm und 50 µm.

Das Spritzpulver eignet sich in besonderer Weise zum thermischen Spritzen einer Oberflächenschicht auf ein Werkstück, das in lagerndem Kontakt mit einem anderen Werkstück zusammenwirkt.

Erfindungsgemäß weist eine durch thermisches Spritzen aufgebrachte eisenhaltige Oberflächenschicht, insbesondere eine Lagerschicht eines Lagerteils einer Lagervorrichtung, abgesehen von Verunreinigungen, die folgende Zusammensetzung auf:
Kohlenstoff = 0.1% bis 1.5% Gewichts-Prozent, Mangan = 0.1% bis 8% Gewichts-Prozent, Schwefel = 0.1% bis 2% Gewichts-Prozent, Kupfer = 12% Gewichts-Prozent, Eisen = Differenz auf 100% Gewichts-Prozent. Darüber hinaus ist mindestens ein Element aus der Gruppe bestehend aus Phosphor, Chrom und Molybdän enthalten, wobei Phosphor mit 0.01% bis 0.2% Gewichts-Prozent, Chrom mit 5% bis 20% Gewichts-Prozent und Molybdän mit 0.1% bis 20% Gewichts-Prozent enthalten ist.

Wie bereits erläutert, weist eine erfindungsgemässe Oberflächenschicht mehr oder weniger isolierte Phasen aus Kupfer auf, die entsprechend räumlich mehr oder weniger isolierte Bereiche aus Kupfer bilden. Diese Kupferausscheidungen bilden relativ weiche Bereiche, das heisst Bereiche mit geringer Härte, in der ansonsten verhältnismässig harten eisenhaltigen Schicht. D.h., die Oberflächenschicht weist Kupferausscheidungen auf, die eine Kupfermatrix bilden können. Die Härte dieser Bereiche aus bzw. mit Kupfer kann dabei zum Beispiel zwischen 80 HV und 200 HV, wobei HV wie üblich Vickers Härte bedeutet, und bevorzugt ca. 100 HV betragen, während die eisenhaltige Schicht in Bereichen ausserhalb der Kupferausscheidungen Härten zwischen 300 HV und 500 HV, bevorzugt eine Härte von ca. 400 HV haben kann.

Dabei haben die Kupferausscheidungen in der eisenhaltigen Schicht nicht nur eine erhebliche Verbesserung der Gleiteigenschaften sowohl bei Trockenschmierung als auch bei Schmierung zwischen zwei Lagerteilen, die durch ein Schmiermittel vermittelt wird, zur Folge, sondern erhöhen auch die Lebensdauer eines Lagers, dessen Lagerteile in lagerndem Kontakt zusammenwirken. Da die Bereiche, die die Kupferausscheidungen enthalten eine relativ geringe Härte haben, also verhältnismässig weich sind, können diese insbesondere harte Fremdkörper, die zwischen die Lagerteile des Lagers gelangen, aufnehmen, indem die Fremdkörper in die Bereiche mit den Kupferausscheidungen eingedrückt werden, so dass die Oberflächen der Lagerteile vor Beschädigungen durch die harten Fremdkörper geschützt werden. Das heisst, die Kupferausscheidungen filtern sozusagen die harten Fremdkörper heraus, d.h. die Fremdkörper werden dauerhaft in den kupferhaltigen Ausscheidungen eingelagert.

Besonders vorteilhaft ist daher z.B. die Oberflächenschicht eines feucht geschmierten Lagers mit einer erfindungsgemässen Oberflächenschicht versehen. Solche Lager sind in der Regel mit einem Schmieröl geschmiert, das Verschmutzungen aller Art, wie z.B. Abrieb, der an den verschiedensten Stellen in der Maschine entstehen kann, enthalten kann. Zwar sind häufig entsprechende Filtervorrichtungen vorgesehen, wie etwa der Ölfilter in einem Benzin- oder Dieselmotor eines Kraftfahrzeugs, jedoch können damit nur Teilchen ab einer bestimmten Grösse wirksam aus dem Schmiermittel gefiltert werden. Insbesondere kleinere Teilchen im Mikrometerbereich werden nicht oder nur unzureichend heraus gefiltert, so dass sie z.B. zwischen die in lagerndem Kontakt stehenden Teile eines Lagers gelangen und dort auf Dauer zur Schädigung dieser Lager führen. Sind die entsprechenden Oberfläche jedoch mit einer erfindungsgemässen Oberflächenschicht versehen, werden die schädlichen Verschmutzungen in den weichen Kupferausscheidungen der Oberflächenschicht im Betrieb des Lagers eingelagert, so dass die in lagerndem Kontakt stehenden Oberflächen durch die Verschmutzungen, also die Schmutzteilchen bzw. die Fremdkörper nicht mehr geschädigt werden.

Dabei enthält die Oberflächenschicht wie bereits erwähnt zusätzlich 0.01% bis 0.2% Gewichts-Prozent Phosphor und zusätzlich 5% bis 20% Gewichts-Prozent Chrom und zusätzlich 0.1% bis 20% Gewichts-Prozent Molybdän enthalten. Insbesondere die Anwesenheit von Chrom und Molybdän in der Oberflächenschicht erhöht entscheidend deren Korrosionsfestigkeit, z.B. gegenüber aggressiven Stoffen, die in einem Schmiermittel zum Schmieren eines Lagers enthalten sein können, oder beim Betrieb einer Brennkraftmaschine entstehen oder auf andere Weise an die beschichtete Oberfläche gelangen.

In einem bevorzugten Ausführungsbeispiel einer erfindungsgemässen Oberflächenschicht ist MnS als Trockenschmierstoff enthalten, wobei der Mangan Anteil zwischen 1% und 2.5% Gewichts-Prozent, bevorzugt bei 1.7% Gewichtsprozent liegt, und der Schwefelanteil zwischen 0.5% Gewichts-Prozent und 1.5% Gewichtsprozent, bevorzugt bei 1% Gewichtsprozent liegt, so dass auch insbesondere Lagerteile, die ohne Schmiermittel in lagerndem Kontakt zusammenwirken, also z.B. die Lagerteile von trocken geschmierten Lagern, besonders vorteilhaft mit einer solchen Oberflächenschicht versehen sein können. Es versteht sich, dass der Trockenschmierstoff MnS auch in feucht geschmierten Lagern, also z.B. in Lagern, die mit Ol oder Fett geschmiert werden, vorteilhaft seine Schmierwirkung in der Oberflächenschicht entfalten kann.

Bevorzugt umfasst die Oberflächenschicht eine Grundmatrix aus α-Eisen, in welchem Bereiche aus ausgeschiedenem Kupfer eingebettet sind.

Dabei umfasst die Oberflächenschicht besonders vorteilhaft ein oder mehrere Karbide, insbesondere FeₓC_{y}, bevorzugt Fe₃C. Diese Karbide, die z.B. in feiner Körnung in der Oberflächenschicht ausgeschieden sein können, erhöhen vor allem die mechanische Festigkeit einer speziellen erfindungsgemässen Oberflächenschicht, da die feinen Karbidkörner das wandern von Versetzungen in der Oberflächenschicht behindern und die Oberflächenschicht dadurch mechanisch stabilisieren.

In einem für die Praxis besonders wichtigen Ausführungsbeispiel weist die Oberflächenschicht eine Porosität von 0.5% bis 5% Volumen-Prozent, insbesondere zwischen 1% und 3% auf. Diese Porosität hat insbesondere bei feucht geschmierten Lagern sehr vorteilhafte Auswirkungen auf die Gleiteigenschaften zwischen zwei in lagerndem Kontakt zusammenwirkenden Lagerteilen, da die Poren Vorratstaschen für Schmieröl bilden, so dass auch unter schwierigen Schmierbedingungen immer genug Schmiermittel zur Schmierung der Lagerteile zur Verfügung steht. Dabei hat sich gezeigt, dass eine Porosität von 0.5% bis 5% Volumen-Prozent, insbesondere zwischen 1 % und 3%, sich besonders günstig auswirkt, so dass dadurch die Schmierung z.B. sowohl im Zustand der Mangelschmierung, als auch im Zustand der hydrodynamischen Schmierung zwischen den Lagerteilen weiter verbessert wird.

Vorteilhaft wird eine erfindungsgemässe Oberflächenschicht durch Honen nachbearbeitet, um deren Güte zu erhöhen und / oder an spezielle geometrische Erfordernisse anzupassen.

Ein besonderer Vorteil ergibt sich für eine aus dem Stand der Technik bekannte Lagervorrichtungen, die zwischen zwei zu lagernden Lagerteilen zusätzlich eine Lagerschale aufweist. Lagerschalen werden, wie dem Fachmann wohlbekannt ist, zwischen einer zu lagernden Welle selbst und in einer Lagermulde, die im Lagersattel ausgebildet ist, angeordnet. Die Lagerschalen selbst sind aus einem Material gefertigt, das z.B. eine geringere Härte aufweist als die Welle, so dass im Betrieb in erster Linie die Lagerschale einem erhöhten Verschleiss unterliegt, so dass ein entsprechender Verschleiss an der Welle selbst reduzierbar ist und der Lagersattel praktische keinen Verschleiss durch Reibung erfährt, weil die Welle nicht unmittelbar mit dem Lagersattel zusammenwirkt, sondern mit der Lagerschale. Das heisst, in solchen Lagervorrichtungen muss zwingend eine Lagerschale vorgesehen sein, da ansonsten die Welle selbst und / oder der Lagersattel in relativ kurzer Zeit verschleissen würde, und somit praktisch das ganze Lager mit Lagersattel und Welle ausgetauscht werden müsste, während, wenn zusätzlich eine Lagerschale vorgesehen ist, nur die Lagerschale ausgetauscht werden muss.

Es liegt auf der Hand, dass ein Lager mit Lagerschale verhältnismässig aufwendig und damit teuer ist und auch das Austauschen der Lagerschalen mit erheblichem Aufwand und Kosten verbunden ist.

Wird dagegen ein Lagerteil einer Lagervorrichtung mit einer erfindungsgemässen Oberflächenschicht versehen, kann auf eine Lagerschale ganz verzichtet werden, da die erfindungsgemässe Oberflächenschciht die Lagerteile gegen Verschleiss schützt, so dass auf eine Lagerschale, die bei einer bekannten Lagervorrichtung dem Schutz der Lagerteile dient, verzichtet werden kann.

Schliesslich betrifft die Erfindung ein Spritzverfahren zum Herstellen einer erfindungsgemässen Oberflächenschicht mit einem erfindungsgemässen Spritzpulver, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

Die Erfindung wird im Fo!genden an Hand der Zeichnung näher erläutert. Es zeigt in schematischer Dartellung:

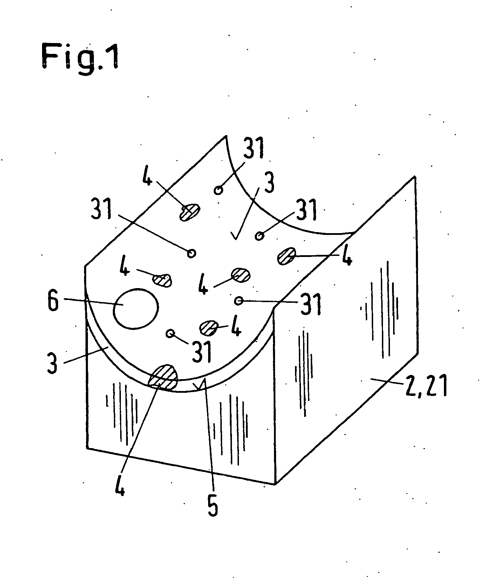

- Fig. 1: ein Lagerteil eines Wellenlagers mit einer erfindungsgemässen Oberflächenschicht.

Fig. 1 zeigt in einer schematischen Darstellung ein Lagerteil 2 eines Wellenlagers mit einer erfindungsgemässen Oberflächenschicht 3 im Schnitt. Dargestellt ist ein Schnitt durch einen Lagersattel 21 eines Wellenlagers. Der Lagersattel 21 weist eine Lagerfläche 5 auf, die mit einer erfindungsgemässen Oberflächenschicht 3 versehen ist. Die Oberflächenschicht 3 kann z.B. eine Schicht aus α-Eisen mit feinen FeₓC_{y}-Karbiden umfassen, wobei die Oberflächenschicht 3 eine offene Porosität von z.B. 2% aufweisen kann. Die Oberflächenschicht 3 umfasst Bereiche 4, die von Ausscheidungen aus Kupfer gebildet werden und Bereiche 31, die MnS umfassen, was ein Trockenschmierstoff ist, die einerseits die Gleitfähigkeit einer hier nicht dargestellten Welle auf der Oberflächenschicht 3 erhöhen und wobei anderseits die Kupferausscheidungen zusätzlich dazu geeignet sind Schmutzteilchen einzulagern. Schmutzteilchen können zum Beispiel durch ein Schmieröl dem Wellenlager zugeführt werden, wobei das Schmieröl in an sich bekannter Weise von einer hier nicht dargestellten Ölpumpe durch die Schmierölöffnungen 6 zwischen die Oberfläche des Lagersattels 21 und die ebenfalls nicht dargestellte, daringelagerte Welle gepresst wird. Durch die erfindungsgemässe Oberflächenschicht 3 ist eine Lagerschale bei dem in Fig. 1 dargestellten Wellenlager überflüssig, da die Oberflächenschicht 3 einerseits die Lagerfläche 5 des Lagersattels 21 im Betriebszustand vor Verschleiss, z.B. durch Reibung mit der Welle, schützt und andererseits durch die Kupferauscheidungen die Gleitfähigkeit der Welle auf der Oberfläche 3 derart verbessert ist, dass eine Lagerschale, wie sie bei Wellenlagern aus dem Stand der Technik bekannt und notwendig sind, nicht mehr notwendig ist.

Durch die Erfindung wird somit ein kupferhaltiges Spritzpulver zur Beschichtung eines Lagerteils einer Lagervorrichtung mittels thermischen Spritzens bereitgestellt. Ein charakteristisches Kennzeichen der mit dem erfindungsgemässen Spritzpulver gespritzten Oberflächenschichten ist dabei, dass die erfindungsgemässe eisenhaltige Schicht Bereiche von Kupferausscheidungen aufweist, die nicht nur eine erhebliche Verbesserung der Gleiteigenschaften sowohl bei Trockenschmierung als auch bei Schmierung zwischen zwei Lagerteilen, die durch ein Schmiermittel vermittelt wird, zur Folge hat, sondern auch die Lebensdauer eines Lagers, dessen Lagerteile in lagerndem Kontakt zusammenwirken, deutlich erhöhen. Das hat seine Ursache unter anderem darin, dass die Kupferausscheidungen eventuelle Schmutzteilchen, die sich zwischen zwei Lagerteilen befinden, einlagern und dadurch binden, so dass diese keine schädlichen Wirkungen an den Oberflächen der Lagerteile mehr verursachen können. Dabei hat die erfindungsgemässe eisenhaltige Oberflächenschicht gleichzeitig eine genügend hohe Härte, so dass das beschichtete Lagerteil so hervorragend gegen Verschleiss, zum Beispiel durch Reibung geschützt ist, dass auf Lagerschalen verzichtet werden kann, wie sie insbesondere bei Wellenlagern oder anderen Lagern aus dem Stand der Technik notwendig sind. Somit wird durch die Erfindung nicht nur die Lebensdauer von an sich bekannten Lagerteilen und der entsprechenden Lager insgesamt deutlich erhöht, sondern es wird auch möglich, bestimmte bekannte Lagervorrichtungen konstruktiv erheblich zu vereinfachen.

## Patentansprüche

1. Spritzpulver zum Beschichten eines Substrats (2), insbesondere zum Beschichten eines Lagerteils (2) einer Lagervorrichtung, welches Spritzpulver, abgesehen von Verunreinigungen, die folgende Zusammensetzung aufweist:
Kohlenstoff = 0.1% bis 1.5% Gewichts-Prozent
Mangan = 0.1% bis 8% Gewichts-Prozent
Schwefel = 0.1% bis 2% Gewichts-Prozent
Kupfer = 12% Gewichts-Prozent
Eisen = Differenz auf 100% Gewichts-Prozent,
sowie mindestens ein Element aus der Gruppe bestehend aus, Phosphor, Chrom und Molybdän, wobei Phosphor mit 0.01% bis 0.2% Gewichts-Prozent, Chrom mit 5% bis 20% Gewichts-Prozent und Molybdän mit 0.1% bis 20% Gewichts-Prozent enthalten ist.

2. Spritzpulver nach Anspruch 1, wobei das Spritzpulver durch Gasverdüsen, Wasserverdüsen, Sintern, Sprühtrocknen oder mechanisches Legieren hergestellt ist.

3. Spritzpulver nach Anspruch 1 oder 2, wobei eine Partikelgrösse des Spritzpulvers zwischen 5µm und 90µm, vorzugsweise zwischen 8µm und 60µm liegt.

4. Durch thermisches Spritzen aufgebrachte eisenhaltige Oberflächenschicht, insbesondere eine Lagerschicht (3) eines Lagerteils (2) einer Lagervorrichtung, welche Oberflächenschicht Kupferausscheidungen (4) aufweist, die als isolierte Phasen auftreten, wobei die eisenhaltige Oberflächenschicht, abgesehen von Verunreinigungen, die folgende Zusammensetzung aufweist:
Kohlenstoff = 0.1% bis 1.5% Gewichts-Prozent
Mangan = 0.1% bis 8% Gewichts-Prozent
Schwefel = 0.1% bis 2% Gewichts-Prozent
Kupfer = 12% Gewichts-Prozent
Eisen = Differenz auf 100% Gewichts-Prozent,
sowie mindestens ein Element aus der Gruppe bestehend aus Mangan, Phosphor, Chrom und Molybdän, wobei Phosphor mit 0.01% bis 0.2% Gewichts-Prozent, Chrom mit 5% bis 20% Gewichts-Prozent und Molybdän mit 0.1% bis 20% Gewichts-Prozent enthalten ist.

5. Oberflächenschicht nach Anspruch 4, wobei MnS als Trockenschmierstoff enthalten ist und der Mangan Anteil zwischen 1% und 2.5% Gewichts-Prozent, bevorzugt bei 1.7% Gewichtsprozent liegt und der Schwefelanteil zwischen 0.5% Gewichts-Prozent und 1.5% Gewichtsprozent, bevorzugt bei 1% Gewichtsprozent liegt.

6. Oberflächenschicht nach einem der Ansprüche 4 oder 5, wobei die Oberflächenschicht eine Grundmatrix aus α-Eisen aufweist.

7. Oberflächenschicht nach einem der Ansprüche 4 bis 6, wobei die Oberflächenschicht Karbide, insbesondere FeₓC_{y}, bevorzugt Fe₃C enthält.

8. Oberflächenschicht nach einem der Ansprüche 4 bis 7, wobei die Oberflächenschicht eine Porosität von 0.5% bis 5% Volumen-Prozent, insbesondere zwischen 1% und 3% aufweist.

9. Oberflächenschicht nach einem der Ansprüche 4 bis 8, die durch Honen bzw. schleifen nachbearbeitet ist.

10. Spritzverfahren zum Herstellen einer Oberflächenschicht nach einem der Ansprüche 4 bis 9, wobei das Spritzverfahren ein thermisches Spritzverfahren, insbesondere ein atmosphärisches Plasmaspritzverfahren, ein Vakuumplasmaspritzverfahren, ein HVOF-Verfahren, ein Flammspritzverfahren oder ein Kaltgasspritzverfahren ist.

## Claims

1. A spray powder for the coating of a substrate (2) in particular for coating a bearing part (2) of a bearing apparatus, said spray powder having at least the following composition, apart from impurities:
Carbon = 0.1% to 1.5% by weight
Manganese 0.1% to 8% by weight
Sulphur = 0.01% to 2% by weight
Copper = 12% by weight
Iron = the difference to 100% by weight
and at least one element from the group consisting of phosphorous, chromium and molybdenum, with phosphorous being present with 0.01 % to 0.2% by weight, chromium being present with 5% to 20% by weight, and molybdenum being present with 0.1% to 20%.

2. A spray powder in accordance with any one of the previous claims wherein the spray powder is manufactured by gas nozzling, water nozzling, sintering, spray drying or mechanical alloying.

3. A spray powder in accordance with claim 1 or claim 2, wherein a particle size of the spray powder lies between 5 µm and 90 µm, preferably between 8 µm and 60 µm.

4. An iron-containing surface layer applied by means of thermal spraying, in particular a bearing layer (3) of a bearing part (2) of a bearing apparatus, said surface layer having copper precipitations (4) which appear as isolated phases, with the iron-containing surface layer having the following composition, apart from impurities:
Carbon = 0.1% to 1.5% by weight
Manganese 0.1% to 8% by weight
Sulphur = 0.1% to 2% by weight
Copper = 12% by weight
Iron = the difference to 100 % by weight
and at least one element from the group consisting of phosphorous, chromium and molybdenum, with phosphorous being present with 0.01 % to 0.2% by weight, chromium being present with 5% to 20% by weight, and molybdenum being present with 0.1% to 20%.

5. A surface layer in accordance with claim 4 wherein MnS is contained as a dry lubricant and the proportion of manganese lies between 1% and 2.5% by weight, preferably at 1.7% by weight and the sulphur proportion lies between 0.5% and 1.5% by weight, preferably at 1% by weight.

6. A surface layer in accordance with one of the claims 4 or 5 with the surface layer having a base matrix of α-iron.

7. A surface layer in accordance with any one of the claims 4 to 6 with the surface layer containing carbides, in particular FeₓC_{y}, preferably Fe₃C.

8. A surface layer in accordance with any one of the claims 4 to 7 with the surface layer having a porosity of 0.5% to 5% by volume, in particular between 1% and 3%.

9. A surface layer in accordance with any one of the claims 4 to 8 which is finished by honing or grinding.

10. A spraying method for the manufacture of a surface layer in accordance with any one of the claims 4 to 9, with the spraying method being a thermal spraying method, in particular an atmospheric plasma spraying method, a vacuum plasma spraying method, an HVOF method, a flame spraying method or a cold gas spraying method.

## Revendications

1. Poudre de pulvérisation pour le revêtement d'un substrat (2), en particulier pour le revêtement d'un élément de palier (2) d'un dispositif de palier, laquelle poudre de pulvérisation, à l'exception des impuretés, présente la composition suivante:
Carbone = 0,1% à 1,5% en poids
Manganèse =0,1% à 8% en poids
Soufre = 0,1% à 2% en poids
Cuivre = 12% en poids
Fer = différence jusqu'à 100% en poids,
ainsi qu'au moins un élément du groupe comprenant le phosphore, le chrome et le molybdène, le phosphore étant présent entre 0,01% à 0,2% en poids, le chrome entre 5% à 20% en poids et le molybdène entre 0,1% à 20% en poids.

2. Poudre de pulvérisation selon la revendication 1, la poudre de pulvérisation étant fabriquée par atomisation de gaz, atomisation d'eau, frittage, séchage par pulvérisation ou opération d'alliage mécanique.

3. Poudre de pulvérisation selon la revendication 1 ou 2, une taille de particule de la poudre de pulvérisation étant comprise entre 5 µm et 90 µm, de préférence entre 8 µm et 60 µm.

4. Couche superficielle ferreuse appliquée par pulvérisation thermique, en particulier une couche de palier (3) d'un élément de palier (2) d'un dispositif de palier, laquelle couche superficielle comporte des précipités de cuivre (4) qui apparaissent sous forme de phases isolées, la couche superficielle ferreuse présentant la composition suivante, à l'exception des impuretés:
Carbone = 0,1% à 1,5% en poids
Manganèse =0,1% à 8% en poids
Soufre = 0,1% à 2% en poids
Cuivre = 12% en poids
Fer = différence jusqu'à 100% en poids,
Ainsi qu'au moins un élément du groupe comprenant le phosphore, le chrome et le molybdène, le phosphore étant présent entre 0,01% à 0,2% en poids, le chrome entre 5% à 20% en poids et le molybdène entre 0,1% à 20% en poids.

5. Couche superficielle selon la revendication 4, dans laquelle est contenu du MnS comme lubrifiant sec et la portion de manganèse est comprise entre 1% et 2,5% en poids, de préférence de 1,7% en poids, et la portion de soufre est comprise entre 0,5% et 1,5% en poids, de préférence de 1% en poids.

6. Couche superficielle selon l'une quelconque des revendications 4 ou 5, dans laquelle la couche superficielle comporte une matrice de base en fer α.

7. Couche superficielle selon l'une quelconque des revendications 4 à 6, dans laquelle la couche superficielle contient des carbures, en particulier du FeₓC_{y}, de préférence du Fe₃C.

8. Couche superficielle selon l'une quelconque des revendications 4 à 7, dans laquelle la couche superficielle présente une porosité comprise entre 0,5% et 5% en volume, en particulier entre 1% et 3% en volume.

9. Couche superficielle selon l'une quelconque des revendications 4 à 8 qui est usinée par rodage ou rectification.

10. Procédé de pulvérisation pour la fabrication d'une couche superficielle selon l'une quelconque des revendications 4 à 9, dans lequel le procédé de pulvérisation est un procédé de pulvérisation thermique, en particulier un procédé de pulvérisation au plasma atmosphérique, un procédé de pulvérisation au plasma sous vide, un procédé HVOF, un procédé de pulvérisation au pistolet à flamme ou un procédé de pulvérisation par gaz froid.
